# EUROPÄISCHE PATENTANMELDUNG

(11) **EP 1 550 382 A2**
(43) Veröffentlichungstag der Anmeldung: **06.07.2005**
(21) Anmeldenummer: 05004644.0
(22) Anmeldetag: 23.02.1998
(51) Int. Cl.: A44C 27/00

(54) **Verwendung einer photopolymerisierbaren Zusammensetzung zur Dekoration von metallischen Schmuckgegenständen**

(30) Priorität: 07.03.1997 DE 19709280
(62) Teilanmeldung aus: 98250062.1
(71) Anmelder: Heraeus Kulzer GmbH, 63450 Hanau (DE)
(72) Erfinder: Gassner, Alfred, 9490 Vaduz (LI); Voser, Dieter, 9494 Schaan (LI)
(74) Vertreter: Kühn, Hans-Christian

(57) **Zusammenfassung**

Es wird die Verwendung einer photopolymerisierbaren Zusammensetzung mit Gehalt an (Meth)acrylat als Dekoration von metallischen Schmuckgegenständen beschrieben, wobei die Zusammensetzung auf den zu dekorierenden Gegenstand aufgebracht und photopolymerisiert wird.

## Beschreibung

Die Erfindung betrifft die Verwendung einer photopolymerisierbaren Zusammensetzung zur Dekoration von metallischen Schmuckgegenständen, wobei insbesondere Zusammensetzungen mit Gehalt an Methacrylat eingesetzt werden.

Ester von Acrylsäure und Methacrylsäure, die abgekürzt auch als (Meth)acrylate bezeichnet werden, haben in der Vergangenheit auch Verwendung zur Herstellung von Modeschmuck oder künstlichen Edelsteinen gefunden. So offenbart die EP-A-581 999 eine aus Polymethylmethacrylat bestehende Edelsteinimitation, welche mittels eines Heisssiegelklebstoffes auf Textilien dauerhaft aufgebracht werden kann.

In der DE-A-39 17 376 wird die Verwendung von Acrylharz zur Beschichtung von Metallteilen von Modeschmuck beschrieben, um auf diese Weise den direkten Kontakt von Metall und Haut auszuschliessen, welcher unter Umständen zu Reizungen und Allergien führen kann.

Weiter offenbart die DE-A-20 51 965 Kunststoffschmuckgegenstände auf Basis von gefärbtem Polymethylmethacrylat.

Die DE-A-24 08 640 beschreibt polymerisierbare Polymer-Monomer-Mischungen, welche Acrylmonomer enthalten und insbesondere zur Herstellung von Zahnprothesen dienen, aber auch zur Fertigung von Schmuck- und Kunstgegenständen geeignet sein sollen.

JP-A-59086604 und JP-A-59086603 offenbaren Zusammensetzungen, die Acrylate, aber keine Füllstoffe enthalten. Sie können mittels Licht gehärtet und zur Herstellung von transparentem Schmuck eingesetzt werden.

In JP-A-5093070 werden ebenfalls lichthärtbare Materialien beschrieben, die (Meth)acrylate enthalten und zur Fertigung von z.B. Knöpfen dienen. Die Herstellung dekorativer Elemente auf einem metallischen Substrat wird nicht offenbart.

Weiter offenbart die DE-A-30 48 823 eine mittels UV-Strahlung härtbare Harzmasse, die neben gesättigtem Copolyester und Photosensibilisator auch verschiedene Acrylate enthalten kann. Die Masse wird zur Herstellung von insbesondere Siebdruckfarben oder Übertragungspapieren für die Dekoration von Töpferwaren eingesetzt.

Schliesslich beschreibt die DE-C-44 12 715 die Verwendung von Mischungen von Edelmetallpulver und Methylmethacrylat-Styrol-Harz zur Herstellung von billigen Schmuckgegenständen, die gegenüber den vollständig aus Edelmetall bestehenden Gegenständen eine geringere Dichte aufweisen.

Die bekannten Materialien zur Herstellung von künstlichen Schmuckgegenständen basieren in der Regel auf Acrylaten, die im Vergleich zu Methacrylaten toxikologisch recht bedenklich sind. Weiter haben diese Materialien nicht die erforderlichen Fliesseigenschaften, um auch komplizierte dekorative Elemente in einfacher Weise auf einem Substrat bilden zu können. Ferner sind ihre mechanischen Eigenschaften, wie Härte, Kratzfestigkeit und Biegefestigkeit, nach der Härtung regelmässig nicht zufriedenstellend.

Bei der Herstellung von metallischen Schmuckgegenständen sind neben der konventionellen Einfassung von Edelsteinen in jüngerer Zeit auch stark gefärbte Emaillen als dekorative Elemente eingesetzt worden. Diese Emaillen werden häufig aber nur als minderwertiges dekoratives Element angesehen, da sie mangels Transparenz nicht den nach wie vor häufig gewünschten optischen Effekt von Edelsteinen oder Halbedelsteinen bieten. Weiter ist die Aufbringung von Emaillen aufwendig, da ein Erwärmen des Schmuckgegenstandes auf hohe Temperaturen erforderlich ist. Auch sind Emaillen sehr brüchig, weshalb sie zur Bildung komplizierterer dekorativer Elemente, wie ringförmiger Elemente, nicht geeignet sind. Schliesslich zeigen Emaillen eine sehr gute Haftung auf Metall, was dazu führt, dass sie bei erforderlichen Korrekturen nur sehr schwierig, z.B. mittels Flusssäure entfernt werden können.

Der Erfindung liegt somit die Aufgabe zugrunde, die Verwendung einer Zusammensetzung zur Dekoration von metallischen Schmuckgegenständen zur Verfügung zu stellen, bei der die Zusammensetzung über Fliesseigenschaften verfügt, die die einfache Verarbeitung auch zu komplizierten dekorativen Elementen auf dem Gegenstand ermöglicht und die aus der Zusammensetzung hergestellten dekorativen Elemente in ihrer optischen Erscheinung Edelsteinen oder Halbedelsteinen ähneln und sehr gute mechanische Eigenschaften und hohen Glanz zeigen. Darüber hinaus sollen diese dekorativen Elemente leicht entfernbar und damit korrigierbar sein.

Diese Aufgabe wird durch die erfindungsgemässe Verwendung nach einem der Ansprüche 1 bis 9 gelöst. Die Erfindung bezieht sich ebenfalls auf das Verfahren zur Herstellung von dekorierten metallischen Gegenständen nach Anspruch 10.

Erfindungsgemäss wird eine photopolymerisierbare Zusammensetzung mit Gehalt an Methacrylat und Füllstoff zur Dekoration von metallischen Schmuckgegenständen eingesetzt, indem zunächst ein Haftvermittler und danach die Zusammensetzung auf den zu dekorierenden Gegenstand aufgebracht und photopolymerisiert wird.

Es ist ein wesentlicher Vorteil der Erfindung, dass die eingesetzten Methacrylate nicht auf die toxiologischen Bedenken wie Acrylate treffen. Der Goldschmied ist daher potentiell schädigenden Substanzen nicht in dem Umfang ausgesetzt, wie dies bei der Verarbeitung der bekannten Materialien auf Basis von Acrylaten der Fall ist.

Beispiele für einsetzbare Methacrylate sind Methylmethacrylat und vor allem Isobutylmethacrylat und Cyclohexylmethacrylat.

Vorzugsweise werden in der Zusammensetzung Methacrylate mit mindestens zwei Methacrylat-Gruppen eingesetzt, da derartige Verbindungen nach Photopolymerisation zu dekorativen Elementen führen, die eine besonders hohe Härte und Festigkeit aufweisen. Diese hohe Härte führt dazu, dass das dekorative Element auch nach längerem Tragen des Schmuckgegenstandes an der Oberfläche nicht matt wird, sondern nach wie vor einen guten Glanz zeigt. Überdies zeichnen sich solche Zusammensetzungen auch durch eine sehr geringe Schlagempfindlichkeit aus.

Bevorzugte Methacrylate mit mindestens zwei Methacrylat-Gruppen sind
Tetraethylenglycoldimethacrylat,
Diethylenglycoldimethacrylat,
Etylenglycoldimethacrylat,
Polyethylenglycoldimethacrylat,
Butandioldimethacrylat,
Hexandioldimethacrylat,
Decandioldimethacrylat,
Bisphenol-A-dimethacrylat und/oder
Trimethylolpropantrimethacrylat.

Besonders bevorzugt werden
Triethylenglycoldimethacrylat,
2,2-Bis-4-(3-methacryloxy-2-hydroxy-propoxy)-phenylpropan (bis-GMA) und/oder
ein Urethanmethacrylat mit mindestens zwei Methacrylat-Gruppen
eingesetzt.

Urethanmethacrylate werden üblicherweise durch Reaktion von Isocyanaten, insbesondere Di- und/oder Triisocyanaten, mit Methacrylaten mit OH-Gruppen hergestellt.

Die erfindungsgemäss eingesetzten Zusammensetzungen enthalten auch einen Füllstoff. Besonders geeignete Füllstoffe sind dabei Quarzund Glaskeramikpulver, Aluminiumoxide und/oder Siliciumoxide. Besonders bevorzugte Füllstoffe sind Glaspulver, z.B. Bariumglas-, Bariumsilikatglas-, Lithium- oder Aluminium-Silikatglas-Pulver und feinstteilige Kieselsäuren, wie pyrogene oder gefällte Kieselsäuren.

Die Füllstoffe werden vorzugsweise in einer Menge von 9 bis 25, insbesondere 9 bis 19 Gew.% eingesetzt.

Aufgrund des Füllstoffgehaltes wird der Zusammensetzung ein Fliessverhalten verliehen, so dass aus ihr auch komplizierte dekorative Elemente, wie z.B. ringförmige Strukturen, gebildet werden können. Durch die Art und die Menge des Füllstoffes wird gewährleistet, dass ein gutes Aufbringen und Verteilen auf dem Substrat möglich ist, aber unerwünschtes Abtropfen oder Wegfliessen nicht auftritt. Überdies bewirken die Füllstoffe eine deutliche Verbesserung der mechanischen Eigenschaften und führen insbesondere zu einer deutlichen Verbesserung der Härte und Festigkeit.

Damit die aus der erfindungsgemäss eingesetzten Zusammensetzung gebildeten Dekorationen in ihrer optischen Erscheinung farbigen Edelsteinen oder Halbedelsteinen ähneln, enthält die Zusammensetzung vorzugsweise einen Farbstoff und/oder Pigment. Besonders bevorzugt werden hierfür die folgenden Farbstoffe/Pigmente verwendet:
schwarz:
   - Microlith schwarz C-T, carbon black pigment (preparation) C.I. Pigment black 7 No. 77266; Ciba Geigy
weiss:
   - Titandioxid E 171, Kronos 1171, Kronos Titan GmbH
rot:
   - Microlith rot BR-T, C.I. Pigment red 144 Azo condensation pigment (preparation), Ciba Geigy
gelb:
   - Cosmenyl gelb 10G, Pigment yellow 3, C.I. No. 11710, Hoechst
   - Cosmenyl gelb G, Pigment yellow 1, C.I. No. 11680, Hoechst
   - Sicotransgelb L 1916, Eisenoxid Pigment, BASF
grün:
   - Cosmenyl Grün GG, Pigment green 7, C.I.No. 74260, Hoechst
violett:
   - Cosmenyl violett RL, Pigment violet 23, C.I. No. 51319, Hoechst
perlweiß:
   - Iriodin 120 Glanzsatin, Merck
blau:
   - Ultramarin Blau L 6498, BASF

Bevorzugt werden die Farbstoffe und/oder Pigmente in einer Menge von 0,03 bis 5 Gew.%, insbesondere 0,03 bis 2,5 Gew.% bezogen auf die Zusammensetzung eingesetzt.

Weiter enthält die Zusammensetzung vorzugsweise auch einen Photoinitiator, wobei hierfür insbesondere Benzophenon oder ein Benzophenon-Derivat, Benzoin oder ein Benzoin-Derivat, ein alpha -Diketon, wie 9,10-Phenantrenchinon, Diacetyl, Furil, Anisil, 4,4'-Dichlorbenzil und 4,4'-Dialkoxybenzil oder Acylphosphinoxide eingesetzt werden. Besonders bevorzugt wird Campherchinon als Photoinitator verwendet. Zur Erzielung von besonders schnell härtenden Zusammensetzungen hat es sich als vorteilhaft erwiesen, die Photoinitiatoren zusammen mit einem Aktivator einzusetzen. Als Aktivator wird vorzugsweise ein Reduktionsmittel und insbesondere ein Amin eingesetzt. Besonders bevorzugte Amine sind N,N-Dimethyl-p-toluidin, N,N-Dihydroxyethyl-p-toluidin und insbesondere N,N-Cyanoethylmethylanilin.

Die Photoinitiatoren und Aktivatoren werden vorzugsweise in einer Gesamtmenge von 0,05 bis 2,0 Gew.% und besonders bevorzugt 0,1 bis 0,8 Gew.% eingesetzt.

Schliesslich können der erfindungsgemäss eingesetzten Zusammensetzung auch noch weitere Zusätze, wie Polymerisationsinhibito-ren, z.B. Hydrochinonmonomethylether (MEHQ), und Lichtstabilisatoren zugesetzt werden.

Es wird insbesondere eine Zusammensetzung eingesetzt, die
(a) 70 bis 90 Gew.%, insbesondere 80 bis 90 Gew.-% Methacrylat,
(b) 0,03 bis 5 Gew.% Farbstoff und/oder Pigment,
(c) 9 bis 25 Gew.%, insbesondere 9 bis 19 Gew.-% Füllstoff und/oder
(d) 0,05 bis 2,0 Gew.% Photoinitiator und Aktivator
enthält.

Erfindungsgemäss werden metallische Schmuckgegenstände, wie Ringe, Broschen, Anstecker, Armbänder und Uhren, mittels der photopolymerisierbaren Zusammensetzung dekoriert, d.h. mit dekorativen Elementen versehen. Es ist dabei ebenfalls möglich, die photopolymerisierbare Zusammensetzung zur Nachbildung von verlorenen Edelsteinen oder Halbedelsteinen, z.B. von Uhren, Schmuck oder Modeschmuck, zu verwenden.

Bei der erfindungsgemässen Verwendung wird die Zusammensetzung auf den zu dekorierenden Gegenstand aufgebracht. Dabei ist es ebenfalls möglich, den zu dekorierenden Bereich des Gegenstandes zuerst mit einem Haftvermittler, wie z.B. Haftvermittler für Metall und Kunststoff, insbesondere solcher auf Basis von Methacryloyloxydecyl-dihydrogenphosphat, hydrophoben Dimethacrylaten und Benzoylperoxid, und anschliessend ebenfalls mit einem Klebstoff zu versehen, bevor die Zusammensetzung aufgebracht wird. Dabei dient der Haftvermittler zur Ausbildung eines guten Verbundes zwischen der Metalloberfläche und dem eingesetzten Klebstoff. Als Klebstoffe werden bevorzugt mittels UV-Licht schnell härtende Klebstoffe, insbesondere auf Urethanacrylatbasis, eingesetzt.

Die dann aufgebrachte Zusammensetzung ist durch den Füllstoffgehalt in ihrer Konsistenz so beschaffen, dass sie einerseits ein vollständiges und schnelles Bedecken des zu dekorierenden Bereiches gestattet, aber andererseits aus diesem Bereich nicht wegfliesst oder abtropft. Als besonderer Vorteil bei der Verarbeitung hat es sich gezeigt, dass die erfindungsgemäss eingesetzte Zusammensetzung transparent und im wesentlichen blasenfrei ist, wodurch sie in ihrem Aussehen Edelsteinen sehr ähnelt.

Abhängig von den der Zusammensetzung gegebenenfalls zugesetzten Farbstoffen können z.B. Saphire, Rubine oder Smaragde nachgeahmt werden.

Nachdem der zu dekorierenden Bereich des Schmuckgegenstandes in der gewünschten Weise mit der Zusammensetzung versehen worden ist, wird die Zusammensetzung photopolymerisiert und damit gehärtet. Hierbei kann in vorteilhafter Weise so vorgegangen werden, dass zunächst mittels eines Lichthandgerätes die Zusammensetzung angehärtet wird, um auf diese Weise eine Fixierung zu erzielen. Aufgrund der hohen Reaktivität der Zusammensetzung ist hierfür eine Bestrahlung mit Licht für ca. 5-10 Sekunden in der Regel völlig ausreichend. Auf diese Weise ist es für den Goldschmied möglich, sofort nach Fertigstellung eines zufriedenstellenden dekorativen Elementes dieses innerhalb kürzester Zeit zu fixieren. Das ist bei konventionellen dekorativen Elementen, wie z.B. Emaillen, nur durch längeres Erwärmen auf hohe Temperaturen möglich.

Üblicherweise wird der dekorierte Schmuckgegenstand nach Anhärtung der Zusammensetzung mittels Lichthandgerät in einem Lichtpolymerisationsgerät vollständig ausgehärtet. Als Lichthandgerät und Lichtpolymerisationsgerät können im dentalen Bereich eingesetzte Geräte verwendet werden. Bevorzugt wird die Photopolymerisation mittels Blaulicht durchgeführt.

Nach der Photopolymerisation zeigt die Zusammensetzung einen sehr guten Glanz, ist tiefentransparent und ästhetisch sehr ansprechend. Darüber hinaus weist die Zusammensetzung auch eine hohe Härte auf, was sich in einer sehr guten Kratzfestigkeit äussert. Insgesamt sind die mittels der erfindungsgemäss eingesetzten Zusammensetzung herstellbaren Dekorationen auf den metallischen Schmuckgegenständen in sehr einfacher Weise für den Goldschmied herstellbar und ähneln in ihrem Aussehen sehr stark Edelsteinen oder Halbedelsteinen.

Sofern gewünscht, kann die Zusammensetzungen nach der Photopolymerisation auch noch weiter bearbeitet werden, sie kann z.B. beschliffen werden, um ihr Aussehen dem von Edelsteinen weiter anzunähern. Ein Nachpolieren ist ebenfalls möglich, obwohl der Eigenglanz der gehärteten Zusammensetzung in den meisten Fällen bereits sehr hoch ist.

Ausserdem können in einfacher Weise auch noch maschinelle Korrekturen an dem erhaltenen dekorativen Element durchgeführt werden.

Die Erfindung betrifft schliesslich auch noch ein Verfahren zur Herstellung von dekorierten metallischen Schmuckgegenständen, bei dein auf den zu dekorierenden Gegenstand zunächst ein Haftvermittler und danach die photopolymerisierbare Zusammensetzung mit Gehalt an Methacrylat und Füllstoff aufgebracht und photopolymerisiert wird.

Im folgenden wird die Erfindung anhand von Beispielen näher erläutert.

### Beispiele

### Beispiel 1

Zunächst wurde die nachstehend angegebene ungefärbte Zusammensetzung durch inniges Vermengen der einzelnen angegebenen Komponenten hergestellt:

### Ungefärbte Zusammensetzung

| **Komponente** | **Gew.%** |
|---|---|
| 2,2-Bis-4-(3-methacryloxy-2-hydroxypropoxy)-phenylpropan (Bis-GMA) | 35,32 |
| Urethandimethacrylat | 31,28 |
| Triethylenglycoldimethacrylat | 16,92 |
| Hydrochinonmonomethylether (MEHQ) | 0,08 |
| Campherchinon | 0,25 |
| Cyanoethylmethylanilin (CEMA) | 0,42 |
| UV-Stabilisator (Tinuvin P, Ciba Geigy) | 0,25 |
| Fluoreszenzhilfsmittel Lumilux flu L blau (Riedel de Haen) | 0,03 |
| Feinstteilige Kieselsäure (Aerosil TM) | 0,45 |
| Glaspulver, silanisiert | 15,00 |
| **Summe** | **100,00** |

Dieser ungefärbten Zusammensetzung wurden entsprechend nachstehender Tabelle Farbstoffe oder Pigmente zugegeben, um z.B. einen Saphir, einen Smaragd, einen Rubin oder einen Amethyst nachzuahmen.

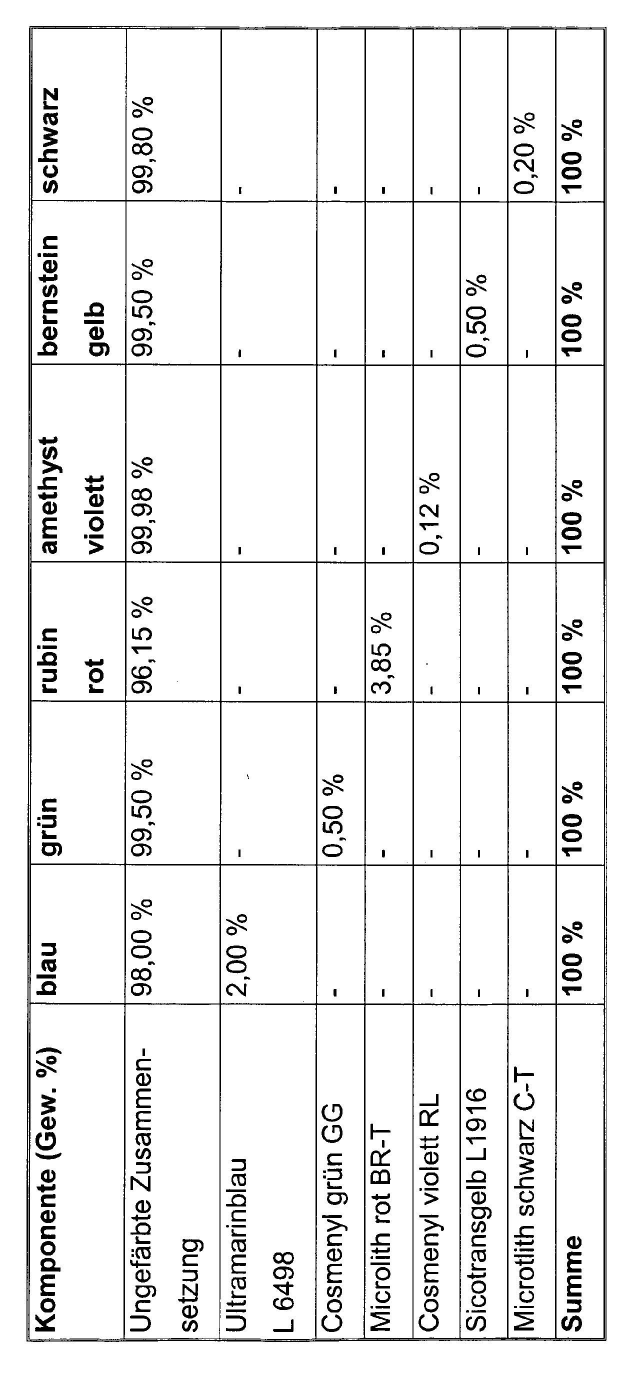

Die einzelnen oben angegebenen gefärbten Zusammensetzungen wurden in der nachstehend erläuterten Weise zur Dekoration eines Ringes verwendet.

Hierzu wurden Ringrohlinge aus 18 Karat Gold mit einer sich mittig über die Außenfläche des Rohlings erstreckenden Nut eingesetzt. In diese Nut wurde zunächst ein Haftvermittler eingebracht, welcher einen guten Verbund zwischen Metalloberfläche und Klebstoff gewährleistet. Auf den Haftvermittler wurde dann ein schnellhärtender UV-Klebstoff auf Urethanacrylat-Basis (Loctite TM 3105) aufgetragen und ausgehärtet. Dann wurde in die Nut die jeweilige gefärbte Zusammensetzung eingebracht. Dabei war auch ein schichtweises Auftragen möglich, ohne dass die Eigenschaften der fertigen Dekoration wesentlich beeinträchtigt worden wären. Die Viskosität der Zusammensetzung gewährleistete ein gutes Einfließen in die Nut, wobei keine Blasen erzeugt wurden und auch ein Herausfließen der Zusammensetzung aus der Nut nicht auftrat. Gegebenenfalls konnte die Zusammensetzung auf ca. 60 ° C erwärmt werden, um das Einfließen zu erleichtern und durch unsachgemäße Handhabung dennoch entstandene Blasen zu entfernen. Nach der vollständigen Ausfüllung der Nut wurde durch Bestrahlung mit einem Lichthandgerät mit Emissionsspektrum von 400 bis 500 nm (Heliolux von der Firma Vivadent) innerhalb eines Zeitraumes von 5-10 Sekunden die Zusammensetzung angehärtet. Zur vollständigen Aushärtung wurde der mit der Zusammensetzung dekorierte Ring in einem Lichtpolymerisationsgerät mit Emissionsspektrum ca. 300 bis 600 nm während einer Dauer von 5 Minuten (Spectramat der Firma Ivoclar) bestrahlt. Nach der Aushärtung zeigte die hergestellte Dekoration einen sehr guten Glanz, war tiefentransparent und ästhetisch äußerst ansprechend.

Sofern gewünscht, konnten die eingesetzten Farbstoffe/Pigmente auch in solchen Konzentrationen eingesetzt werden, die zum Verlust der Transparenz und damit zu opaken Dekorationen führten. Dies kann dann erwünscht sein, wenn z.B. die nicht-transparenten Halbedelsteine nachgebildet werden sollen. Dabei wurde in Abänderung der obigen Vorgehensweise die Nut des Rohlings sandgestrahlt, bevor der Haftvermittler (Targis Link der Firma Ivoclar) aufgebracht wurde, und es wurde auf die Verwendung des UV-Klebstoffes verzichtet.

## Patentansprüche

1. Verwendung von einer photopolymerisierbaren Zusammensetzung mit Gehalt an Methacrylat und Füllstoff zur Dekoration von metallischen Schmuckgegenständen, indem zunächst ein Haftvermittler und danach die Zusammensetzung auf den zu dekorierenden Gegenstand aufgebracht und photopolymerisiert wird.

2. Verwendung nach Anspruch 1, wobei die Zusammensetzung Methacrylat mit mindestens zwei Methacrylat-Gruppen enthält.

3. Verwendung nach Anspruch 2, wobei als Methacrylat mit mindestens zwei Methacrylat-Gruppen
Tetraethylenglycoldimethacrylat,
Diethylenglycoldimethacrylat,
Ethylenglycoldimethacrylat,
Polyethylenglycoldimethacrylat,
Butandioldimethacrylat,
Hexandioldimethacrylat,
Decandioldimethacrylat,
Dodecandioldimethacrylat,
Bisphenol-A-dimethacrylat und/oder
Trimethylolpropantrimethacrylat,
eingesetzt wird.

4. Verwendung nach Anspruch 2, wobei als Methacrylat mit mindestens zwei Methacrylat-Gruppen
Triethylenglycoldimethacrylat,
2,2-Bis-4-(3-methacryloxy-2-hydroxy-propoxy)-phenylpropan (Bis-GMA) und/oder
ein Urethanmethacrylat mit mindestens zwei Methacrylat-Gruppen
eingesetzt wird.

5. Verwendung nach einem der Ansprüche 1 bis 4, wobei die Zusammensetzung Farbstoff und/oder Pigment enthält.

6. Verwendung nach einem der Ansprüche 1 bis 5, wobei als Füllstoff
Quarz-Pulver, Glas-Pulver, Glaskeramik-Pulver,
Aluminiumoxid, Siliciumoxid und/oder feinstteilige Kieselsäure
eingesetzt wird.

7. Verwendung nach einem der Ansprüche 1 bis 6, wobei die Zusammensetzung Photoinitiator enthält.

8. Verwendung nach Anspruch 7, wobei als Photoinitiator
Benzophenon oder ein Benzophenon-Derivat,
Benzoin oder ein Benzoin-Derivat,
ein alpha -Diketon,
ein Acylphosphinoxid und/oder
Campherchinon
eingesetzt wird.

9. Verwendung nach einem der Ansprüche 1 bis 8, wobei die Zusammensetzung
(a) 70 bis 90 Gew.%, insbesondere 80 bis 90 Gew.- Methacrylat,
(b) 0,03 bis 5 Gew.% Farbstoff und Pigment,
(c) 9 bis 25 Gew.%, insbesondere 9 bis 19 Gew.- % Füllstoff,
und/oder
(d) 0,05 bis 2,0 Gew.% Photoinitiator und Aktivator
enthält.

10. Verfahren zur Herstellung von dekorierten metallischen Schmuckgegenständen, bei dem auf den zu dekorierenden Gegenstand zunächst ein Haftvermittler und danach eine photopolymerisierbare Zusammensetzung mit Gehalt an Methacrylat und Füllstoff aufgebracht und photopolymerisiert wird.
